# DEMANDE DE BREVET EUROPEEN

(11) **EP 4 044 407 A1**
(43) Date de publication de la demande: **17.08.2022**
(21) Numéro de dépôt: 22155922.2
(22) Date de dépôt: 09.02.2022
(51) Int. Cl.: H02K 3/50, H02K 3/28, H02K 11/33

(54) **INTERCONNECTEUR POUR UNE MACHINE ÉLECTRIQUE TOURNANTE**

(30) Priorité: 16.02.2021 FR 2101459
(71) Demandeur: VALEO EQUIPEMENTS ELECTRIQUES MOTEUR, 94046 Créteil Cedex (FR)
(72) Inventeur: EL BARAKA, Khadija, 94046 CRETEIL CEDEX (FR); JUGOVIC, Svetislav, 94046 CRETEIL CEDEX (FR); LEGRANGER, Jerome, 94046 CRETEIL CEDEX (FR); DE CLERCQ, Stephane, 94046 CRETEIL CEDEX (FR)
(74) Mandataire: Valeo Powertrain Systems

(57) **Abrégé**

La présente invention propose une machine électrique tournante comprenant : une pièce bobinée, la pièce bobinée comprenant un corps (21) et un bobinage électrique (24) comportant une pluralité de conducteurs électriques connectés entre eux de sorte à former des phases (A, B, C, U, V, W), ledit bobinage (24) étant de type bobinage ondulé, un interconnecteur (40) agencé pour connecter électriquement le bobinage électrique à des modules électroniques de puissance. L'interconnecteur comprend plusieurs traces électriques (41) chacune présentant une première extrémité de connexion (42) agencée pour connecter ladite trace avec un module électronique de puissance et une pluralité de secondes extrémités de connexion (43), chacune étant agencée pour connecter ladite trace avec un conducteur du bobinage. L'interconnecteur comporte autant de trace que le bobinage électrique comporte de phase électrique (A, B, C, U, V, W) et chaque trace comporte au moins quatre secondes extrémités de connexion.

## Description

L'invention concerne notamment une machine électrique tournante munie d'un interconnecteur agencé pour connecter électriquement un bobinage électrique d'une partie active telle qu'un stator ou un rotor à un convertisseur de tension de la machine électrique tournante.

L'invention trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique par exemple pour fournir un couple au véhicule. Un véhicule est par exemple ici un véhicule automobile, un vélo, un drone ou tout engin servant à transporter ou mettre en mouvement un élément.

Une machine électrique tournante comprend un rotor mobile en rotation autour d'un axe et un stator fixe. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation par exemple pour démarrer ou entrainer le moteur thermique ou fournir un couple au véhicule.

Pour suivre l'évolution du marché, les machines électriques tournantes doivent être de plus en plus puissantes tout en présentant un rendement optimisé et un encombrement réduit pour diminuer leur poids et leur taille et/ou s'adapter à des nouvelles applications et véhicules du type drone, scooter, trottinette électrique, etc. Il devient ainsi nécessaire d'optimiser le design des machines électriques tournantes pour accompagner ces évolutions et s'adapter aux nouvelles contraintes. A cet effet, la présente invention a donc pour objet une machine électrique tournante comprenant : une pièce bobinée, formant notamment un stator ou un rotor, la pièce bobinée comprenant un corps et un bobinage électrique logé au moins partiellement dans le corps et comportant une pluralité de conducteurs électriques connectés électriquement entre eux de sorte à former des phases électriques dudit bobinage, ledit bobinage étant de type bobinage ondulé, un interconnecteur agencé pour connecter électriquement le bobinage électrique à des modules électroniques de puissance d'un ensemble électronique de la machine électrique tournante, l'interconnecteur comprenant plusieurs traces électriques chacune présentant une première extrémité de connexion agencée pour connecter électriquement ladite trace avec un module électronique de puissance associé et une pluralité de secondes extrémités de connexion, chacune étant agencée pour connecter électriquement ladite trace avec un conducteur du bobinage électrique. Selon l'invention, l'interconnecteur comporte autant de trace que le bobinage électrique comporte de phase électrique et chaque trace comporte au moins quatre secondes extrémités de connexion.

Il est ainsi possible de simplifier la structure de l'interconnecteur en limitant le nombre de trace et de connexion à réaliser. Une telle machine dont la structure de l'interconnecteur est simplifiée permet d'optimiser le schéma électrique et l'agencement des conducteurs électriques dans les encoches et des connexions entre lesdits conducteurs formant le bobinage électrique. Il devient ainsi possible d'améliorer la puissance de la machine tout en limitant son encombrement et sa complexité de fabrication.

Selon une réalisation, chaque trace électrique de l'interconnecteur présente une portion de liaison agencée pour connecter la première extrémité de connexion et les secondes extrémités de connexion. Cela permet de simplifier la fabrication de l'interconnecteur et de limiter les contraintes de connexion entre les éléments. Par exemple, chaque trace est monobloc de sorte à ce que la première extrémité, la portion de liaison et les secondes extrémités soient issues de matière les unes avec les autres.

Selon une réalisation, chaque seconde extrémité de connexion d'une trace est connectée électriquement avec uniquement un conducteur électrique du bobinage. Cela permet de simplifier la réalisation des connexions électriques.

Selon une réalisation, chaque trace électrique s'étend sur une portion uniquement de la circonférence de la machine électrique tournante. Cela permet de réduire l'encombrement de l'interconnecteur.

Selon une réalisation, au moins deux des secondes extrémités de connexion d'une même trace électrique sont respectivement agencées pour connecter électriquement des conducteurs électriques du bobinage électrique appartenant à la même phase électrique. Il est ainsi réalisé, de manière simple, une connexion en parallèle de deux conducteurs électriques d'une même phase.

Selon une réalisation, chaque trace électrique est agencée pour connecter électriquement entre elles deux phases électriques du bobinage électrique.

Selon une réalisation, le bobinage électrique présente un couplage triangle. Un tel couplage permet de diminuer l'encombrement de l'interconnecteur en évitant la formation d'un point neutre.

Selon une réalisation, chaque seconde extrémité de connexion présente une section minimale de dimension supérieure à une section maximale d'un conducteur électrique avec lequel ladite extrémité est connectée. Cela permet d'augmenter la puissance électrique qui pouvant être supportée par la trace.

Selon une réalisation, l'interconnecteur comporte, en outre, au moins un boitier formé d'un matériau électriquement isolant, ledit boitier logeant au moins en partie les traces électriques. Le boitier permet d'isoler électriquement les traces électriques entre elles, de les protéger de l'environnement extérieur et de simplifier leur assemblage sur la machine.

Selon une réalisation, le bobinage électrique comprend plusieurs systèmes de phase, chaque système comprenant au moins deux phases électriques et en ce que l'interconnecteur comporte au moins deux sous-ensembles d'interconnexion distinct l'un de l'autre, chaque sous-ensemble d'interconnexion comprenant des traces électriques associées à un même système de phase du bobinage électrique.

Selon une réalisation, les systèmes de phase sont indépendants les uns des autres de sorte qu'il n'y a pas de connexion électrique entre les phases de deux systèmes distincts.

Selon une réalisation, les sous-ensembles d'interconnexion sont agencés de manière diamétralement opposée l'un par rapport à l'autre sur la circonférence de la machine.

Selon une réalisation, les deux sous-ensembles d'interconnexion sont symétriques par rapport à l'axe de la machine.

Selon une réalisation, la machine électrique tournante comporte, en outre, au moins un carter entourant au moins partiellement la pièce bobinée, l'interconnecteur étant monté sur le carter. Cela permet de simplifier la fixation de l'interconnecteur dans la machine.

Selon une réalisation, le carter s'étend entre l'interconnecteur et la pièce bobinée. Cela permet de simplifier la réalisation de l'interconnecteur en s'affranchissant des problèmes d'isolation électrique des connexions de l'interconnecteur lorsque la pièce bobinée est au moins partiellement logée dans une chambre contenant un liquide de refroidissement.

Selon une réalisation, chaque phase du bobinage électrique présente au moins deux branches formées chacune d'une pluralité de conducteurs électriques connectés électriquement entre eux, les branches d'une même phase étant connectées électriquement en parallèle par l'intermédiaire de l'interconnecteur.

Selon une réalisation, chaque phase du bobinage électrique présente au moins deux enroulements formés chacun d'une pluralité de conducteurs électriques connectés électriquement entre eux, les enroulements d'une même phase étant connectés électriquement en série par l'intermédiaire d'une épingle de connexion du bobinage électrique.

Selon une réalisation, l'épingle de connexion présente au moins un segment conducteur logé dans une encoche du corps.

Selon une réalisation, chaque branche d'une phase comporte au moins deux enroulements connectés électriquement en série l'un avec l'autre.

Selon une réalisation, chaque conducteur électrique comprend au moins un segment conducteur formant une barre conductrice logée dans une encoche du corps de pièce bobinée et au moins deux extrémités de connexion, chaque extrémité de connexion étant connectée à une extrémité de connexion d'un autre conducteur électrique de la même phase ou à une seconde extrémité de connexion de l'interconnecteur.

Selon une réalisation, le corps de la pièce bobinée présente une culasse annulaire s'étendant autour d'un axe et une pluralité de dents s'étendant à partir d'une face latérale de la culasse dans une direction radiale de manière à délimiter des encoches logeant le bobinage électrique.

Selon une réalisation, les segments conducteurs des conducteurs électriques, destinés à être logés dans une même encoche, forment N couches. Ainsi, chaque encoche comprend N segments appartenant à des conducteurs différents. Par exemple, une couche est formée par un unique segment.

Selon cette réalisation, une phase du bobinage comporte un premier groupe de conducteurs dont les segments conducteurs sont disposés dans deux couches et un second groupe de conducteurs dont les segments conducteurs sont disposés dans deux couches, les couches comportant le premier groupe de conducteurs étant distinctes des couches comportant le second groupe de conducteurs. Par exemple, chaque groupe de conducteur forme un enroulement. Toujours par exemple, l'épingle de connexion permet de relier le premier groupe au second groupe.

Selon une réalisation, les segments conducteurs d'un même groupe de conducteur sont agencés dans deux couches adjacentes radialement.

Selon une réalisation, une phase du bobinage comporte au moins deux conducteur électriques, dits épingles d'alimentation, formant une entrée et une sortie. Par exemple, chaque épingle d'alimentation comportant un segment conducteur présentant une première extrémité connectée à un autre conducteur électrique de la même phase et une deuxième extrémité connectée à une seconde extrémité de connexion d'une trace électrique de l'interconnecteur. Les épingles d'alimentation permettent de connecter le bobinage à un module électronique de puissance et/ou de commande.

Les conducteurs appartenant à un des deux groupes de conducteur sont dits épingles classiques. Selon une réalisation, chaque phase comporte une pluralité d'épingles classiques du premier groupe, une pluralité d'épingles classiques du second groupe, au moins une épingle de connexion et au moins deux épingles d'alimentation.

La machine électrique tournante peut, avantageusement, former un alternateur, un alterno-démarreur, une machine réversible ou un moteur électrique.

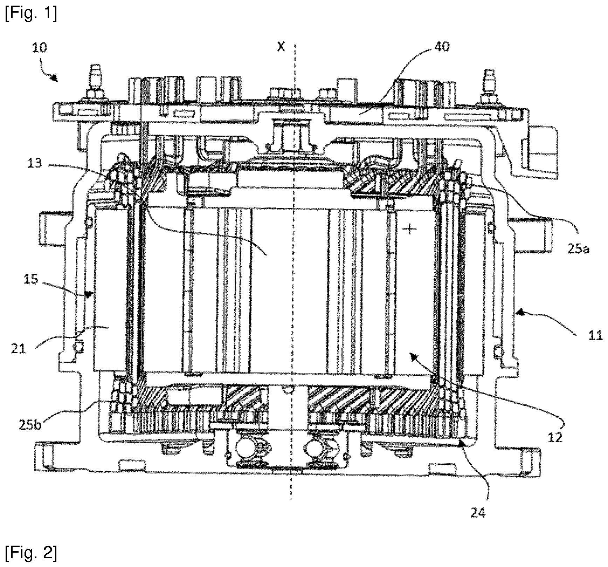

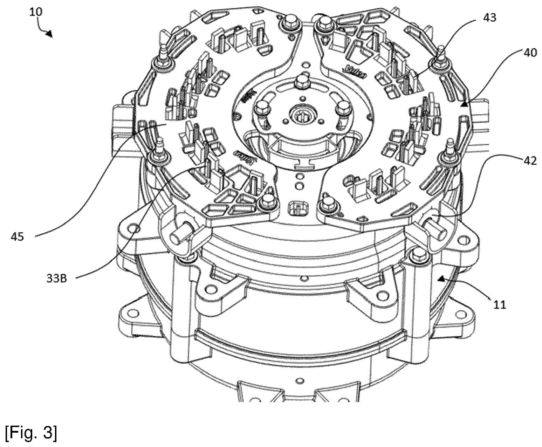

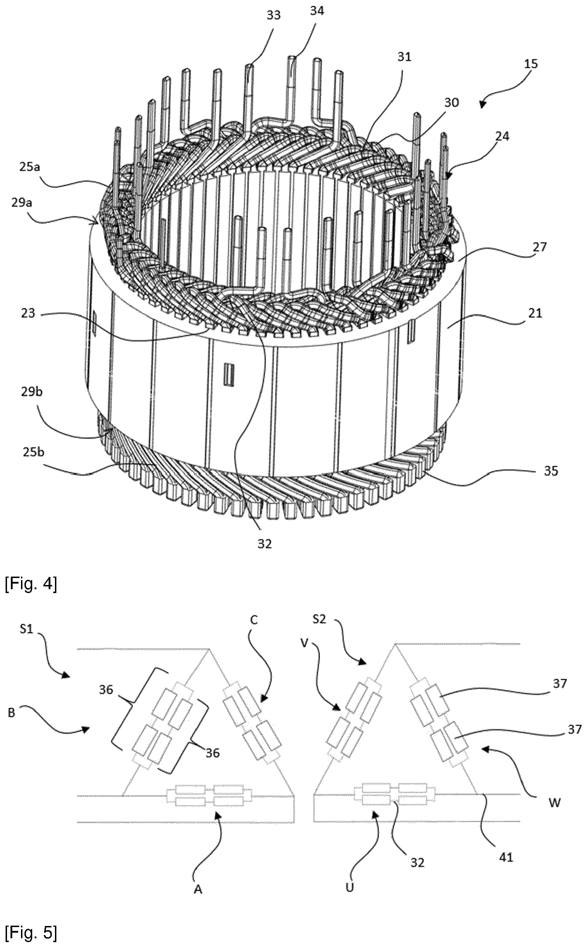

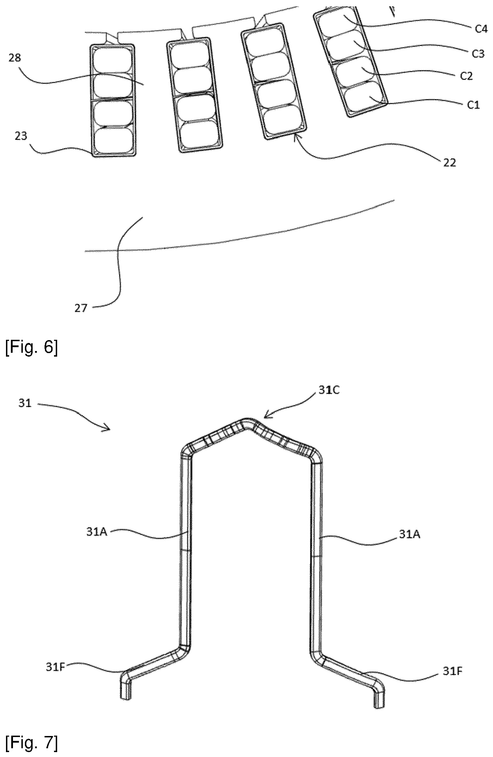

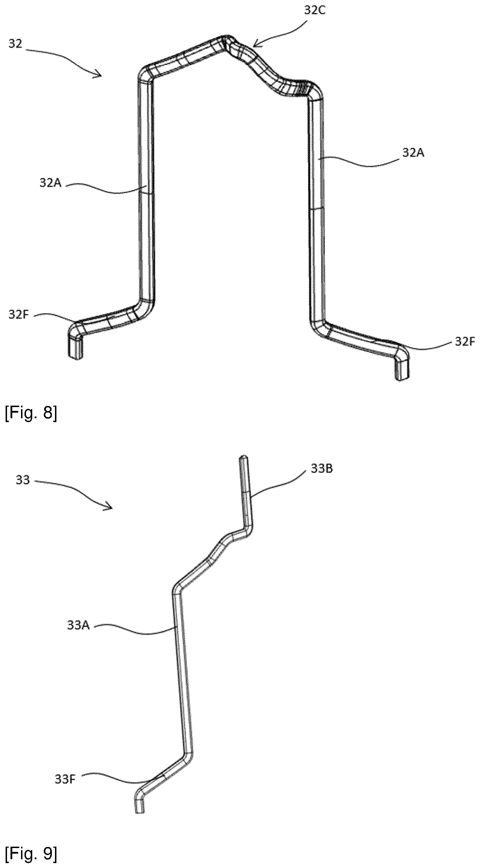

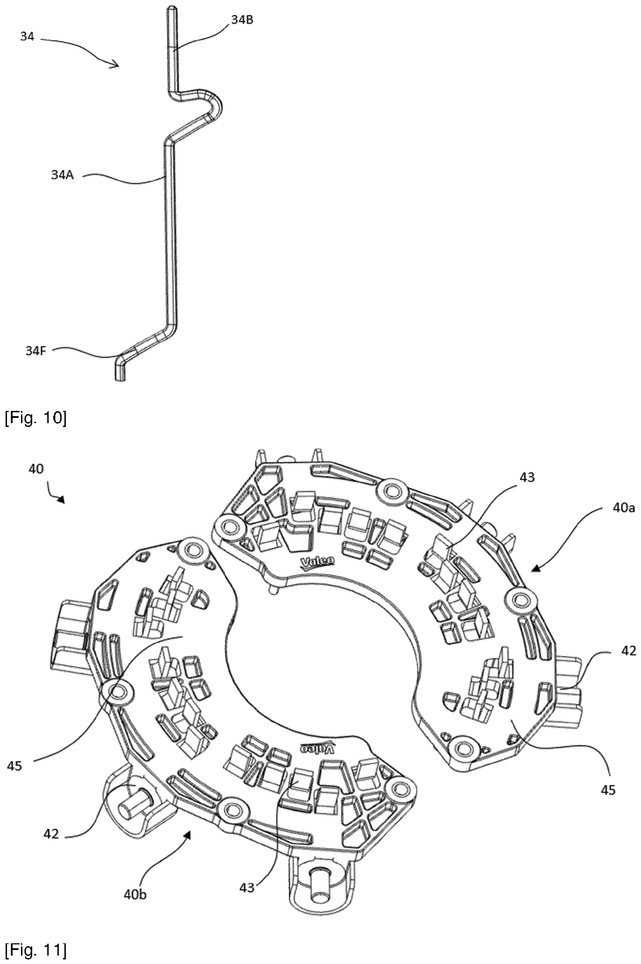

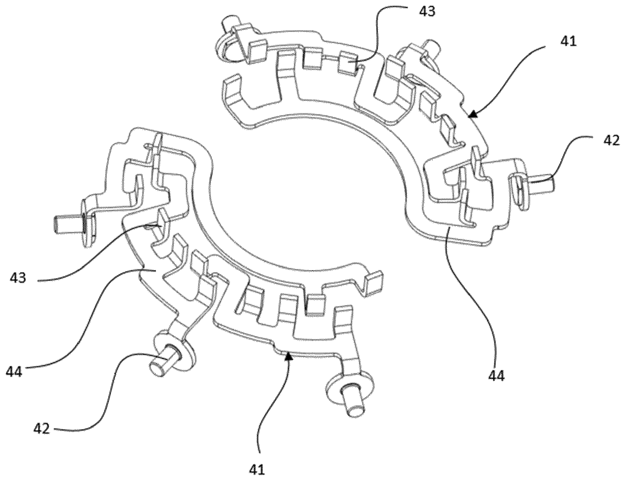

La présente invention pourra être mieux comprise à la lecture de la description détaillée qui va suivre, d'exemples de mise en œuvre non limitatifs de l'invention et de l'examen des dessins annexés. Les [Fig. 1] et [Fig. 2] représentent respectivement, schématiquement et partiellement, une vue en coupe et une vue en perspective d'une machine électrique tournante selon un exemple de mise en œuvre de l'invention. La [Fig. 3] représente schématiquement une vue en perspective du stator de la figure 1 ou la figure 2. La [Fig. 4] représente schématiquement une vue schématique du bobinage de la figure 2 illustrant l'exemple de couplage du stator. La [Fig. 5] représente schématiquement une vue en coupe suivant un plan radial d'une partie du stator de la figure 3. La [Fig. 6] représente schématiquement une vue en perspective d'une épingle classique du stator de la figure 3. La [Fig. 7] représente schématiquement une vue en perspective d'une épingle de connexion du stator de la figure 3. Les [Fig. 8] et [Fig. 9] représentent schématiquement des vues en perspective d'une première épingle d'alimentation et d'une seconde épingle d'alimentation du stator de la figure 3. La [Fig. 10] représente schématiquement une vue en perspective de interconnecteur l'exemple de la figure 2. La [Fig. 11] représente schématiquement une vue en perspective des traces de interconnecteur de la figure 10.

Les éléments identiques, similaires ou analogues conservent les mêmes références d'une figure à l'autre. On notera également que les différentes figures ne sont pas nécessairement à la même échelle.

Les figures 1 et 2 représentent un exemple de machine électrique tournante 10 compacte et polyphasée, notamment pour véhicule tel qu'un véhicule automobile. Cette machine 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique.

Dans cet exemple, la machine 10 comporte un boitier 11. A l'intérieur de ce boitier 11, elle comporte, en outre, un arbre 13, un rotor 12 solidaire en rotation de l'arbre 13 et un stator 15 entourant le rotor 12. Le mouvement de rotation du rotor 12 se fait autour d'un axe X. Dans la suite de la description, la direction axiale correspond à l'axe X, traversant en son centre l'arbre 13, alors que les orientations radiales correspondent à des plans concourants, et notamment perpendiculaires, à l'axe X. Pour les directions radiales, la dénomination interne correspondant à un élément orienté vers l'axe, ou plus proche de l'axe par rapport à un second élément, la dénomination externe désignant un éloignement de l'axe.

Dans cet exemple, le boitier 11 comporte un premier flasque et un second flasque qui sont assemblés ensemble. En outre, le boitier 11 comporte des moyens de fixation 14 portés par les flasques permettant le montage de la machine électrique tournante 10 dans le véhicule. Les flasques sont ici agencés de manière à former une chambre pour la circulation d'un liquide de refroidissement tel que de l'eau ou de l'huile. Alternativement, les flasques pourraient comporter des ouvertures pour le passage d'un flux d'air de refroidissement engendré par la rotation d'au moins un ventilateur solidaire en rotation avec le rotor ou l'arbre.

Dans cet exemple, le rotor 12 est formé d'un paquet de tôles logeant des aimants permanents formant les pôles magnétiques. Le rotor peut comprendre 4, 5, ou 6 paires de pôles. Alternativement, le rotor pourrait être un rotor à griffe comportant deux roues polaires et une bobine rotorique.

Dans cet exemple de réalisation, le stator 15 comporte un corps 21 formé d'un paquet de tôles doté d'encoches 22, équipées d'isolant d'encoche 23 pour le montage d'un bobinage électrique 24. Le bobinage traverse les encoches du corps 21 et forment un premier chignon 25a et un deuxième chignon 25b de part et d'autre du corps du stator. Par ailleurs, le bobinage 24 est formé de plusieurs phases comportant chacune une pluralité de conducteurs électriques et étant reliées électriquement à un ensemble électronique formant un convertisseur de tension. La machine comporte un interconnecteur 40 permettant de connecter électrique le bobinage électrique 24 et l'ensemble électronique.

L'ensemble électronique, également appelé onduleur, non représenté ici, peut être déporté de la machine 10 ou être monté sur le boitier 11. L'onduleur comporte un étage de puissance permettant de recevoir ou de fournir un signal électrique de puissance aux phases électrique du bobinage 24. Le module de puissance forme un pont redresseur de tension pour transformer la tension alternative générée par les phases du stator en une tension continue et/ou, à l'inverse, pour transformer une tension continue en une tension alternative pour alimenter les phases du stator. L'onduleur comporte également un étage de commande permettant notamment de contrôler la machine et de faire l'interface avec un calculateur externe du véhicule.

Les figures 3 et 5 représentent plus en détail le stator 15. Le corps du stator 21 est formé d'une culasse 27 de forme annulaire autour de l'axe X et d'une pluralité de dents 28 s'étendant radialement en direction du centre du stator à partir de la culasse, et en particulier ici à partir d'une face latérale formant une paroi interne de la culasse 27. Les dents 28 sont réparties angulairement régulièrement sur le pourtour du corps annulaire, avec des espaces successifs ménagés entre elles de manière à définir les encoches 22 s'étendant en série sur le pourtour du corps annulaire du stator, chaque encoche étant délimitée par deux dents successives. Selon le présent exemple, les dents délimitent 48 encoches réparties le long de la circonférence du corps de stator, ces encoches étant agencées pour former support au bobinage électrique 24. En variante, un nombre différent d'encoches peut être utilisé tel que 96, 84, 72, 60. Il est entendu que ce nombre dépend notamment de l'application de la machine, du diamètre du stator et du nombre de pôles du rotor. Selon la direction axiale, c'est-à-dire la direction parallèle à l'axe X, les encoches 22 sont ouvertes sur une première face d'extrémité axiale 29a et une seconde face d'extrémité axiale 29b du corps de stator 21. Autrement dit, les encoches traversent axialement de part en part le corps et débouchent sur les deux faces d'extrémité axiales opposées du stator. Par les termes « faces d'extrémité axiales », on entend des faces perpendiculaires ou sensiblement perpendiculaires à l'axe de révolution X du stator.

Les phases du bobinage 24 sont ici connectées les unes aux autres de sorte à former un couplage triangle comme illustré sur la figure 4. Les connexions entre les phases sont réalisées par l'intermédiaire de l'interconnecteur 40. Les phases du bobinage 24 sont répartis en deux systèmes de phase S1, S2, ici, indépendant l'un de l'autre. Dans l'exemple illustré ici, chaque système S1, S2 comporte trois phases A, B, C, U, V, W, notamment couplées en triangle.

Chaque phase A, B, C, U, V, W est formée de plusieurs branches 36, notamment ici deux branches, connectées en parallèle. Chaque branche 36 est formée de plusieurs enroulements 37, notamment ici deux enroulements, connectés en série. Le bobinage 24 et notamment les enroulements sont du type bobinage ondulé par opposition à un bobinage du type concentrique. Un enroulement est formé de plusieurs conducteurs électriques connectés en série de sorte à former un chemin s'étendant sur au moins une portion de la circonférence du stator. Chaque conducteur est enroulé uniquement partiellement autour d'une même dent.

Chaque phase A, B, C, U, V, W est formée à partir d'une pluralité de conducteurs électriques, dits épingles, reliés électriquement entre eux pour former des chemins électriques. La description ci-dessous est faite en rapport avec une branche 36 d'une phase du bobinage électrique, l'homme du métier comprendra que toutes branches et toutes les phases sont formées d'une manière identique.

Dans cet exemple, chaque branche 36 d'une même phase comprend une pluralité d'épingles classiques 30, 31, une épingle de connexion 32 et deux épingles d'alimentation 33, 34. Chaque conducteur électrique comprend au moins un segment conducteur. Comme visible sur la figure 4, les différents segments conducteurs disposés dans une même encoche sont superposés afin de former un empilement de N couches Ci, étant entendu que ces N couches sont présentes dans chacune des encoches de sorte que l'on forme sur le pourtour du stator des cercles annulaires sensiblement coaxiaux entre eux. Par exemple, ces couches sont au nombre de quatre et numérotées de C1 à C4, selon leur ordre d'empilement dans les encoches 22. La première couche C1 correspond à la couche externe, la deuxième couche C2 correspond à une couche centrale externe directement voisine de la première couche C1, la troisième couche C3 correspond à la couche centrale interne directement voisine de la deuxième couche C2 et la quatrième couche C4 correspond à la couche interne. La première couche C1 est ainsi occupée par le segment conducteur le plus proche de la culasse 27 et la couche C4 est ainsi occupée par le segment conducteur le plus proche de l'ouverture d'encoche, c'est-à-dire le plus proche de l'axe X. Bien entendu, l'invention ne se limite pas à ce seul mode de réalisation de sorte qu'un nombre supérieur de segments conducteurs peut être empilé dans chaque encoche par exemple 6, 8 ou 10 conducteurs. Par exemple, une couche est formée par un unique segment conducteur. Ainsi, chaque encoche 22 comprend N segments conducteurs alignés radialement les uns par rapport aux autres sur une seule ligne et formant chacun une couche Ci. Dans l'exemple illustré, les segments conducteurs présentent chacun une section sensiblement rectangulaire facilitant leur empilement dans l'encoche.

Les figures 5, 6, 7 et 8 illustrent les différentes formes d'épingles formant le bobinage électrique 24. Les épingles classiques sont réparties en un premier groupe d'épingles classiques 30 formant le premier enroulement 37 de la branche et un deuxième groupe d'épingles classiques 31 formant le second enroulement 37 de ladite branche 36. Un exemple d'épingle classique est illustré en figure 6. Chaque épingle classique 30, 31 est formée de deux segments conducteurs 31A s'étendant axialement dans les encoches 22 et qui sont à cet effet sensiblement parallèle entre eux. Lesdits segments conducteurs 31A sont connectés entre eux à une de leur extrémité par l'intermédiaire d'une jonction coudée 31C qui est également conductrice de manière à former une continuité électrique. Dans l'exemple illustré ici, la jonction coudée 31C est issue de matière et monobloc avec les segments conducteurs 31A. On parle classique d'une épingle en forme de U. Alternativement, la jonction coudée pourrait être formée par un élément conducteur rapporté au segment conducteur. Toujours alternativement, la jonction coudée pourrait être formée par deux éléments conducteurs connectés électriquement ensemble par exemple par soudage, chacun des éléments étant issu de matière avec un des segments conducteurs. Dans cette dernière alternative, l'épingle est formée par deux portions d'épingle en forme de I. Les segments conducteurs 31A sont connectés à des segments conducteurs d'une autre épingle à une de leur extrémité par l'intermédiaire d'une extrémité de liaison 31F qui est également conductrice de manière à former une continuité électrique et issue de matière avec le segment conducteur 31A associé. L'extrémité de liaison est agencée de manière axialement opposée à la jonction coudée 31C, le segment conducteur 31A étant agencé entre ladite extrémité et ladite jonction.

La figure 7 illustre un exemple d'épingle de connexion 32. Ladite épingle 32 est formée de deux segments conducteurs 32A s'étendant axialement dans les encoches 22 et qui sont à cet effet sensiblement parallèle entre eux. Les segments conducteurs 31A, 32A d'une même épingle 30, 31, 32 sont disposés dans deux encoches distinctes l'une de l'autre. Lesdits segments conducteurs sont connectés entre eux par l'intermédiaire d'une jonction coudée 32C, ladite jonction étant similaire aux jonctions 31C des épingles classiques. Les segments conducteurs 32A sont connectés à des segments conducteurs d'une autre épingle à une de leur extrémité par l'intermédiaire d'une extrémité de liaison 32F, ladite extrémité étant similaire aux extrémités 32F des épingles classiques.

Les figures 8 et 9 illustrent deux exemples d'épingles d'alimentation 33, 34. Les épingles d'alimentation 33, 34 sont chacune formées d'un segment conducteur 33A, 34A s'étendant axialement dans les encoches 22, d'une extrémité d'alimentation 33B, 34B et d'une extrémité de liaison 33F, 34F, chacune des extrémités s'étendant respectivement de part et d'autre axialement du segment conducteur. Les extrémités d'alimentation 33B, 34B s'étendent dans le chignon du bobinage comprenant les jonctions coudées 21C, 32C. Les épingles d'alimentation 33, 34 se différentient l'une de l'autre notamment par la forme de leur extrémité d'alimentation.

Comme visible sur la figure 3, chaque épingle 30, 31, 32 est agencée de manière à ce que d'une part ses segments conducteurs s'étendent dans deux encoches distinctes E et E+P, séparées par un pas P, et que d'autre part chaque jonction coudée soit disposée au niveau de la première face d'extrémité axiale 29a tandis que les extrémités de liaisons sont disposés au niveau de la seconde face d'extrémité axiale 29b et sont reliées entre elles ou avec les extrémités de liaison des épingles d'alimentation 33, 34 de manière à générer une continuité électrique dans le bobinage d'une épingle à l'autre. Dans cet exemple de bobinage 24, les extrémités de liaisons de segments conducteurs agencés dans la première couche C1 et les extrémités de liaisons de segments conducteurs agencés dans la deuxième couche C2 sont reliées entre elles et les extrémités de liaisons de segments conducteurs agencés dans la troisième couche C3 et les extrémités de liaisons de segments conducteurs agencés dans la quatrième couche C4 sont reliées entre elles. Ces liaisons sont par exemple faites par soudure.

Le premier groupe d'épingles classiques 30 forme un groupe dit extérieur, qui comporte les épingles classiques 30 dont les segments conducteurs sont logés dans les encoches de manière à former la première couche C1 et la deuxième couche C2. Le second groupe d'épingles classiques 31 forme un groupe dit intérieur, qui comporte les épingles classiques 31 dont des segments conducteurs sont logés dans les encoches de manière à former la troisième couche C3 et la quatrième couche C4. Plus précisément, les épingles classiques 30, 31 sont agencées de sorte que les segments conducteurs d'une même épingle classique occupent des encoches distinctes avec un décalage radial d'une couche d'une encoche à l'autre, autrement dit des couches adjacentes. Dans cet exemple, une épingle classique 30 présente un premier segment conducteur occupant la première couche C1 dans une encoche et un second segment conducteur occupant la deuxième couche C2 dans une autre encoche. Similairement, une épingle classique 31 présente un premier segment conducteur occupant la troisième couche C3 dans une encoche E et un second segment conducteur occupant la quatrième couche C4 dans une autre encoche.

Pour une même phase, chacun de ces groupes forme un enroulement 37 d'une branche 36. L'épingle de connexion 32 est agencée pour raccorder électriquement le premier groupe d'épingles conductrice 30 au second groupe d'épingles conductrice 31. L'épingle de connexion 32 est ici agencée pour connecter en série les deux enroulements 37 d'une même branche 36. Le premier segment conducteur de l'épingle de connexion 32 est disposé dans une des couches associées au premier groupe d'épingles classiques 30 et le second segment conducteur de ladite épingle est disposé dans une des couches associées au second groupe d'épingles classiques 31. En particulier dans cet exemple, le premier segment conducteur de l'épingle de connexion 32 est disposé dans la troisième couche C3 et le second segment conducteur de ladite épingle est disposé dans la première couche C1. Les épingles de connexion 32 se différentient des épingles classiques 30, 31 notamment par la forme de la jonction coudée 32C. Alternativement, l'épingle de connexion 32 pourrait présenter un premier segment conducteur disposé dans la quatrième couche C4 et un second segment conducteur disposé dans la première couche C1 ou un premier segment conducteur disposé dans la quatrième couche C4 et un second segment conducteur disposé dans la deuxième couche C2 ou un premier segment conducteur disposé dans la troisième couche C3 et un second segment conducteur disposé dans la deuxième couche C2.

Chaque branche 36 d'une même phase présente deux épingles d'alimentation et notamment une épingle d'alimentation 33 et une épingle d'alimentation 34. Chaque épingle d'alimentation forme une entrée et/ou une sortie de la branche correspondante. Chaque phase A, B, C, U, V, W présente quatre épingles d'alimentation 33, 34, une phase étant formée de deux branches 36. Les épingles d'alimentation 33, 34 sont connectées, par l'intermédiaire de l'interconnecteur 40, à un module électronique de puissance de l'onduleur.

Comme illustré sur les figures 2, 10 et 11, l'interconnecteur 40 comprend plusieurs traces électriques 41. Chaque trace 41 présente une première extrémité de connexion 42 agencée pour connecter électriquement ladite trace avec un module électronique de puissance de l'onduleur. Chaque trace présente uniquement une première extrémité 42. Chaque trace électrique 41 présente une pluralité de secondes extrémités de connexion 43, chacune étant agencée pour connecter électriquement ladite trace 41 avec une épingle d'alimentation 33, 34 du bobinage électrique 24. Chaque trace électrique 41 présente également une portion de liaison 44 agencée pour connecter la première extrémité de connexion 42 et les secondes extrémités de connexion 43. Par exemple, chaque trace est monobloc de sorte à ce que la première extrémité 41, la portion de liaison 44 et les secondes extrémités 42 soient issues de matière les unes avec les autres.

L'interconnecteur 40 comporte le même nombre de trace 41 que le bobinage électrique comporte de phase électrique. Autrement dit, le nombre de trace est égal au nombre de phase. Plus particulièrement dans l'exemple illustré ici d'un bobinage électrique double triphasé, l'interconnecteur comprend six traces 41.

Plus particulièrement dans l'exemple illustré ici d'un bobinage électrique dont chaque phase présente deux branches connectées en parallèle, chaque trace 41 comporte quatre secondes extrémités de connexion 43. Les secondes extrémités de connexion 42 d'une même trace électrique 41 permettent à la fois de connecter deux branches 36 d'une même phase A, B, C, U, V, W en parallèle et de connecter deux phases ensemble pour former une portion du couplage. Plus précisément, deux des secondes extrémités de connexion d'une même trace sont connectés électriquement à deux épingles d'alimentation 33, 34 de deux branches différentes d'une même phase et les deux autres secondes extrémités de connexion de ladite même trace sont connectés électriquement à deux épingles d'alimentation 33, 34 de deux branches différentes d'une autre phase. Bien entendu, l'invention ne se limite pas à ce seul mode de réalisation de sorte qu'un nombre supérieur de branches connectées en parallèle entrainerait une augmentation du nombre de secondes extrémités de connexion.

Dans l'exemple illustré ici, les portions de liaison 44 s'étendent de manière globalement transversale par rapport à l'axe X et les extrémités de connexion 42, 43 s'étendent de manière globalement axiale. Les traces 41 peuvent également être agencée dans un même plan transversal. Alternativement, les traces peuvent être décalées axialement les unes par rapport aux autres.

Les secondes extrémités de connexions 43 s'étendent ici dans une direction opposée axialement aux première extrémités de connexion 42. Les secondes extrémités de connexion 43 s'étendent ici dans une direction opposée axialement au bobinage 24.

Par exemple, les secondes extrémités de connexion 43 des traces 41 d'un même système de phase S1, S2 sont agencées de manière alternée entre les traces le long de la circonférence de l'interconnecteur 40. Autrement dit, lesdites secondes extrémités 43 d'une même trace peuvent être séparées circonférentiellement par une seconde extrémité de connexion 43 d'une autre trace du même système de phase ou être adjacentes.

Les secondes extrémités de connexion 43 sont ici agencées de manière alignée axialement avec le bobinage 24. Les secondes extrémités 43 peuvent être décalées radialement de sorte à être alignées radialement avec l'extrémité d'alimentation 33B, 34B associée. Chaque seconde extrémité de connexion 43 est connectée électriquement avec uniquement un conducteur électrique du bobinage 24 et plus particulièrement avec une unique extrémité d'alimentation 33B, 34B d'une épingle d'alimentation 33, 34. La connexion entre lesdites extrémités est faite par exemple par soudage. Dans cet exemple, certaine ou chaque extrémité de connexion 43 est en contact radial avec l'extrémité d'alimentation 33B, 34B associée. Alternativement, certaine ou chaque extrémité de connexion 43 est en contact circonférentiel avec l'extrémité d'alimentation 33B, 34B associée.

Dans l'exemple illustré ici, les secondes extrémités de connexion 43 présentent une section de dimension globalement supérieure à une section de l'extrémité d'alimentation associée. Cela permet de maximiser le courant électrique supporté par la trace. De préférence, une trace 41 présente une section de dimension globalement égale le long de chacune de ses extrémités 42, 43 et portion de liaison 44. Il est également possible qu'une trace présente une section localement réduite pour des raisons d'encombrement.

Chaque trace électrique 41 s'étend sur une portion uniquement de la circonférence de la machine électrique tournante. Chaque trace présente une forme globalement d'arc de cercle.

Dans cet exemple, l'interconnecteur 40 comporte, en outre, au moins un boitier 45 formé d'un matériau électriquement isolant, ledit boitier logeant au moins en partie les traces électriques 41 et notamment les portions de liaison 44. Les traces 41 sont par exemple surmoulée dans le boitier 45.

L'interconnecteur 40 est dans cet exemple de réalisation monté sur le carter 11, et notamment sur l'un des flasques, de manière à ce que le carter s'étende entre l'interconnecteur et le stator 15. L'interconnecteur 40 est monté par exemple par vissage sur le carter 11.

Dans cet exemple, l'interconnecteur 40 comporte au moins deux sous-ensembles d'interconnexion 40a, 40b distinct. Chaque sous-ensemble 40a, 40b est associé à un des systèmes de phase S1, S2. Par exemple, chaque sous-ensemble comporte trois traces 41 et un boitier 45. Les sous-ensemble 40a, 40b peuvent être identiques et/ou agencés de manière symétrique. Les sous-ensembles 40a, 40b sont agencés de manière diamétralement opposée l'un par rapport à l'autre sur la circonférence de la machine. Par exemple, deux points médians suivant la circonférence de chaque sous-ensembles d'interconnexion sont espacés de 180°.

La présente invention trouve des applications en particulier dans le domaine des alternateurs, des alterno-démarreurs, des moteurs électriques ou encore des machines réversibles mais elle pourrait également s'appliquer à tout type de machine tournante. Bien entendu, la description qui précède a été donnée à titre d'exemple uniquement et ne limite pas le domaine de la présente invention dont on ne sortirait pas en remplaçant les différents éléments par tous autres équivalents.

## Revendications

1. Machine électrique tournante comprenant :
- une pièce bobinée, formant notamment un stator (15) ou un rotor (12), la pièce bobinée comprenant un corps (21) et un bobinage électrique (24) logé au moins partiellement dans le corps et comportant une pluralité de conducteurs électriques connectés électriquement entre eux de sorte à former des phases électriques (A, B, C, U, V, W) dudit bobinage, ledit bobinage (24) étant de type bobinage ondulé,
- un interconnecteur (40) agencé pour connecter électriquement le bobinage électrique (24) à des modules électroniques de puissance d'un ensemble électronique de la machine électrique tournante (10), l'interconnecteur (40) comprenant plusieurs traces électriques (41) chacune présentant une première extrémité de connexion (42) agencée pour connecter électriquement ladite trace avec un module électronique de puissance associé et une pluralité de secondes extrémités de connexion (43), chacune étant agencée pour connecter électriquement ladite trace avec un conducteur du bobinage électrique (24) ;
la machine étant **caractérisée en ce que** l'interconnecteur (40) comporte autant de trace (41) que le bobinage électrique comporte de phase électrique (A, B, C, U, V, W) et **en ce que** chaque trace (41) comporte au moins quatre secondes extrémités de connexion (43).

2. Machine selon la revendication précédente, **caractérisée en ce qu'**au moins deux des secondes extrémités de connexion (43) d'une même trace électrique (41) sont respectivement agencées pour connecter électriquement des conducteurs électriques du bobinage électrique (24) appartenant à la même phase électrique (A, B, C, U, V, W).

3. Machine selon l'une quelconque des revendications précédentes, **caractérisée en ce que** chaque trace électrique (41) est agencée pour connecter électriquement entre elles deux phases électriques (A, B, C, U, V, W) du bobinage électrique.

4. Machine selon l'une quelconque des revendications précédentes, **caractérisée en ce que** chaque seconde extrémité de connexion (43) présente une section minimale de dimension supérieure à une section maximale d'un conducteur électrique avec lequel ladite extrémité est connectée.

5. Machine selon l'une quelconque des revendications précédentes, **caractérisée en ce que** l'interconnecteur (40) comporte, en outre, au moins un boitier (45) formé d'un matériau électriquement isolant, ledit boitier logeant au moins en partie les traces électriques (41).

6. Machine selon l'une quelconque des revendications précédentes, **caractérisée en ce que** le bobinage électrique (24) comprend plusieurs systèmes de phase (S1, S2), chaque système comprenant au moins deux phases électriques (A, B, C, U, V, W) et **en ce que** l'interconnecteur (40) comporte au moins deux sous-ensembles d'interconnexion (40a, 40b) distinct l'un de l'autre, chaque sous-ensemble d'interconnexion comprenant des traces électriques (41) associées à un même système de phase (S1, S2) du bobinage électrique.

7. Machine selon la revendication précédente, **caractérisée en ce que** les sous-ensembles d'interconnexion (40a, 40b) sont agencés de manière diamétralement opposée l'un par rapport à l'autre sur la circonférence de la machine (10).

8. Machine selon l'une quelconque des revendications précédentes, **caractérisée en ce que** la machine (10) comporte, en outre, au moins un carter (11) entourant au moins partiellement la pièce bobinée et **en ce que** l'interconnecteur (40) est monté sur le carter.

9. Machine selon l'une quelconque des revendications précédentes, **caractérisée en ce que** chaque phase (A, B, C, U, V, W) du bobinage électrique présente au moins deux branches (36) formées chacune d'une pluralité de conducteurs électriques connectés électriquement entre eux, les branches (36) d'une même phase étant connectées électriquement en parallèle par l'intermédiaire de l'interconnecteur (40).

10. Machine selon l'une quelconque des revendications précédentes, **caractérisée en ce que** chaque phase (A, B, C, U, V, W) du bobinage électrique présente au moins deux enroulements (37) formés chacun d'une pluralité de conducteurs électriques connectés électriquement entre eux, les enroulements (37) d'une même phase étant connectés électriquement en série par l'intermédiaire d'une épingle de connexion (32) du bobinage électrique (24).

11. Machine selon l'une quelconque des revendications précédentes, **caractérisée en ce que** chaque conducteur électrique comprend au moins un segment conducteur (31A, 32A, 33A, 34A) formant une barre conductrice logée dans une encoche (22) du corps de pièce bobinée et au moins deux extrémités de connexion (31F, 32F, 33F, 34F, 33B, 34B), chaque extrémités de connexion étant connectée à une extrémité de connexion d'un autre conducteur électrique de la même phase (A, B, C, U, V, W) ou à une seconde extrémité de connexion (43) de l'interconnecteur (40).
